# EUROPEAN PATENT SPECIFICATION

(11) **EP 3 077 137 B1**
(45) Date of publication and mention of the grant of the patent: **17.02.2021**
(21) Application number: 14867691.9
(22) Date of filing: 27.11.2014
(51) Int. Cl.: B22D 17/20

(54) **DIE CASTING MACHINE SHOT SLEEVE**
GIESSKAMMER FÜR DRUCKGIESSMASCHINE
CYLINDRE D'INJECTION POUR MACHINE À COULER SOUS PRESSION

(30) Priority: 06.12.2013 SG 201309056
(43) Date of publication of application: 12.10.2016
(73) Proprietor: Pratt & Whitney Services Pte Ltd., Singapore 508982 (SG)
(72) Inventor: LIM, Yuan Kwang, Singapore 600214 (SG); LOH, Yan Seng, Singapore 650385 (SG); TAN, Andrew, Singapore 650407 (SG); CHEE, Yao Hui, Singapore 600267 (SG); WONG, Shin Han, Singapore 310049 (SG); KWAN, Yee Ling, Singapore 550245 (SG)
(74) Representative: Dehns
(86) International application number: PCT/SG2014/000561
(87) International publication number: WO 2015/084260

(56) References cited:
- JP-A- H0 647 515
- JP-A- H02 211 961
- JP-A- H07 214 279
- JP-A- H10 113 755
- JP-A- H11 300 457
- JP-A- 2000 033 467
- JP-A- 2006 315 037
- JP-A- 2009 195 935
- US-A- 4 926 926
- US-A- 5 012 856
- US-A- 5 012 856

## Description

### BACKGROUND

This disclosure relates to a multi-layered shot sleeve for a die casting machine.

A typical die casting machine includes a shot sleeve having a pour opening that receives molten metal. A plunger moves axially within a cavity provided by the shot sleeve to force the molten metal into a die providing a component shape.

During die casting, one of the more problematic issues is the control of the gap between the shot sleeve and the piston. Distortion of the shot sleeve during the die casting process is a strong factor that modulates the gap and causes interference to occur between sleeve and piston. Too large of a gap causes metal blow-by and jamming of solidified metal between sleeve and piston. Too small of a gap causes interference when a sleeve distorts. Many methods have been used throughout the die cast industry to try to control this gap, such as using a water-cooled piston, heater/oil routed shot sleeves, cooling jackets, etc. One or more of these approaches may increase tool life for the casting foundry.

One type of distortion is sometimes referred to as the "banana effect" of shot sleeves, or cantilevering of shot sleeve about a constrained end. This undesired banana effect can be avoided by achieving uniform temperature throughout the length of the shot sleeve, but this is almost impossible to achieve. During casting, the shot sleeve is typically no more than 50% filled before the piston has started moving. Even with the piston traveling inside the shot sleeve, only a segment of the shot sleeve sees the full molten melt temperature. This problem is only exacerbated in very high temperature die casting processes. The distortion may be only about 0.004 inch (0.01 mm), but this slight distortion can cause interference between shot sleeve and piston, which wears the sleeve/piston interface as the piston retracts and drags along the length of the shot sleeve. A long tube simply worsens the effect.

A multi-layered shot sleeve has been proposed in an attempt to maintain sufficiently high casting temperatures between molten shots. A consolidated, unsintered layer of ceramic is provided between inner and outer metal layers. The ceramic layer provides improved insulating properties to the shot sleeve. Loose ceramic is provided between the inner and outer layers and packed using a hot isostatic pressing (HIP) process to a relatively low density. The inner and/or outer layers are then machined to desired dimensions. This process attempts to ensure that the ceramic does not bond to the inner metal layer or transfer any significant load between the inner and outer metal layers so that the ceramic is not cracked due to thermal shock during casting.

A prior art method having the features of the preamble to claim 1 is disclosed in JP H07 214279.

### SUMMARY

From one aspect, the present invention provides a method of manufacturing a shot sleeve for a die casting machine according to claim 1.

In an embodiment of the above, the inner sleeve layer shrink fitting step is performed after the outer sleeve layer shrink fitting step.

In a further embodiment of any of the above, the intermediate sleeve layer is provided by ring segments.

In a further embodiment of any of the above, the shot sleeve consists of three layers provided by the outer, intermediate and inner sleeve layers.

In a further embodiment of any of the above, the outer sleeve layer shrink fitting step is performed by providing the outer sleeve layer at a higher temperature than the intermediate sleeve layer. The intermediate sleeve layer is inserted into the outer sleeve layer.

In a further embodiment of any of the above, the inner sleeve layer shrink fitting step is performed by providing the inner sleeve layer at a lower temperature than the intermediate sleeve layer. The inner sleeve layer is inserted into the intermediate sleeve layer.

In a further embodiment of any of the above, the method includes the step of replacing a worn inner sleeve layer by heating the outer sleeve layer and removing the intermediate and inner sleeve layers from the outer sleeve layer.

In a further embodiment of any of the above, the method includes the step of machining the inner sleeve surface to provide a plunger surface that is configured to receive a plunger.

In a further embodiment of any of the above, the method includes the step of replacing a worn inner sleeve layer by heating the outer sleeve layer and removing the intermediate and inner sleeve layers from the outer sleeve layer.

In a further embodiment of any of the above, the shrink fitting step provides an interference fit in the amount of 0.0024 inch (61 µm).

### BRIEF DESCRIPTION OF THE DRAWINGS

The disclosure can be further understood by reference to the following detailed description when considered in connection with the accompanying drawings wherein:
Figure 1 is a schematic view of an example die casting machine.
Figure 2 is a schematic cross-sectional view of an example shot sleeve.
Figure 3 is a schematic cross-sectional view of another example shot sleeve.
Figure 4 is a flow chart depicting an example method of manufacturing the shot sleeve.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

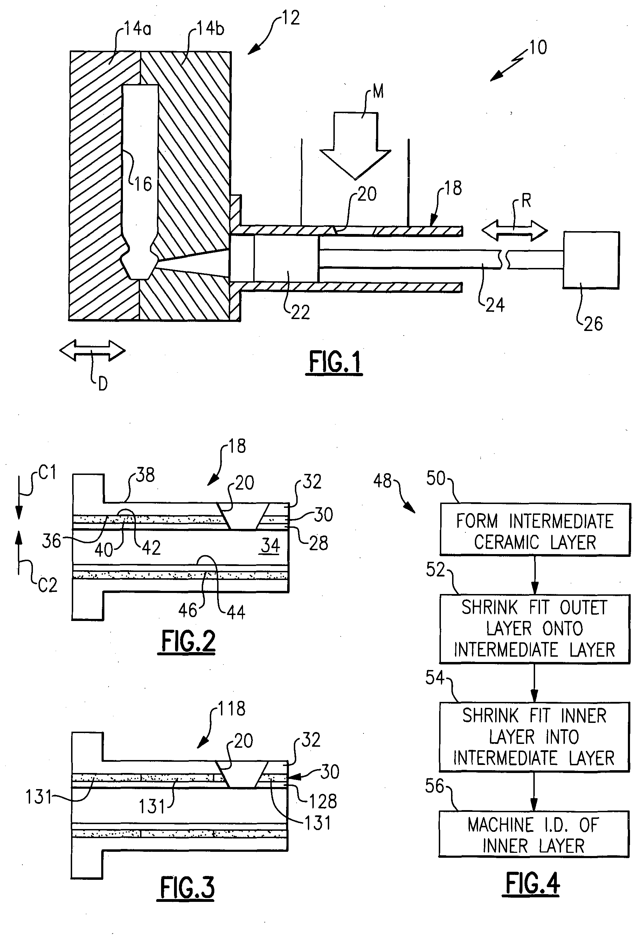

A die casting machine 10 is schematically illustrated in Figure 1. The machine 10 includes a die 12 having multiple die portions 14A, 14B that cooperate with one another to provide a part shape 16. The die 12 is exemplary only and may have any suitable configuration depending on the application.

A shot sleeve 18 is in fluid communication with the die 12 to force molten metal into the die 12 during the die casting process. The shot sleeve 18 includes a pour opening 20 that receives molten material M. A plunger 22 is retracted by an actuator 26 via a rod 24 such that molten metal may be received in an area in the shot sleeve 18 immediately beneath the pour opening 20 and left of the retracted plunger 22. The plunger 22 is moved axially along a plunger axis R to the position illustrated in Figure 1 to force the molten metal into the die 12. Once the molten metal has sufficiently solidified within the die 12, the die portions 14A, 14B are separated in the direction D.

An arrangement of nested sleeves is used to provide the shot sleeve 18, as shown in Figure 2. In the example, three layers of sleeves are shown, although it should be understood that more layers may be used.

With reference to Figure 2, an intermediate sleeve layer 30 is provided radially between inner and outer sleeve layers 28, 32. The sleeve layers 28, 30, 32 are assembled in such a manner so as to generate a compressive force on the intermediate sleeve layer 30 of at least 35-45 MPa.

The outer sleeve layer 32 includes inner and outer diameter surfaces 36, 38. The intermediate sleeve layer 30 includes inner and outer diameter surfaces 40, 42. The inner sleeve layer 28 includes inner and outer diameter surfaces 44, 46. The inner diameter surface 44 corresponds to a plunger surface that cooperates with the plunger 22 during the casting process.

The inner and outer diameter surfaces 40, 42 are respectively in engagement with the inner and outer diameter surfaces 36, 46 in an assembled condition. The pour opening 20 may be provided in each of the inner, intermediate and outer sleeve layers 28, 30, 32 prior to assembly, if desired. A refractory-weldable pour liner can be incorporated if desired, which will eliminate washout effects from the hot impingement molten metal being dumped from a height into the shot tube.

The intermediate sleeve layer 30 is provided by a ceramic. Ceramic materials have unique properties of high compressive strength and low thermal expansion. The choice of ceramics can be but not limited to alumina, mullite, silicon nitrides and or their oxide/nitride derivatives. Ceramics have extremely high compressive strength with typical values of above 2100 MPa for alumina and 3800 MPa for silicon nitride. Ceramics also have a low linear coefficient of thermal expansion (CTE), for example, alumina has a CTE value of ∼7.7 to 8 x 10⁻⁶/°C in the temperature range of 400-800°C, and silicon nitride has a CTE value of ∼3.2 x 10⁻⁶/°C in the temperature range 400-800°C.

The inner and outer sleeve layers 28, 32 are provided by a metal. A typical H13 metal at a temperature range 400-800°C has a CTE of 12.4 x 10⁻⁶/°C . Thus, by having a heat insulating, low thermal expansion ceramic interlayer, coupled with its very high compressive strength because there is simply no room for bending movement in a sandwiched construction.

In one example, the outer sleeve layer 32 is made of a H13 material. Since this layer does not contact molten metal, a non-premium grade of H13 can be used to reduce cost. This inner sleeve layer can be non-H13 steel grades or other materials, for example. A high wear resistant grade of steel in high speed steels can be used for inner sleeve to reduce frictional wear between the plunger and the shot sleeve.

A shot sleeve 18 is manufactured, as indicated at 48 in Figure 4. To provide the compressive forces C1 and C2 on the intermediate sleeve layer 30, at least one of the inner and outer sleeve layers 28, 32 are shrink fit relative to the intermediate sleeve layer 30, which is provided at block 50. In one example, the outer sleeve layer 32 is first shrink fit onto the intermediate sleeve layer 30 (block 52) to provide an interference of about 0.0024 inch (0.06mm). The resulting radial compressive force C1 maintains the integrity of the intermediate sleeve layer 30 so that it does not break during assembly. Then, the inner sleeve layer 28 can be shrink fit into the intermediate sleeve layer 30 (block 54) to provide the radial compressive force C2.

Alternatively, in arrangements outside the scope of the present invention, the intermediate sleeve layer 30 may be sprayed onto one of the inner and outer sleeve layers 28, 32 and the other of the inner and outer sleeve layers 28, 32 is shrink-fit relative to the intermediate sleeve layer 30.

Since the compressive forces applied to the intermediate sleeve layer 30 may distort or alter the dimensions of the inner diameter surface 44, the inner sleeve layer 28 may be machined to provide the desired dimension for the cavity 34, if necessary, as shown at block 56.

If the inner sleeve layer 28 becomes worn, the inner sleeve layer 28 may be removed by heating the outer sleeve layer and removing the intermediate inner sleeve layers 30, 28 from the outer sleeve layer 32.

Figure 3 illustrates a shot sleeve 118 in which the intermediate sleeve layer 130 is provided by multiple ring segments 131, which may simplify assembly of the shot sleeve 118.

The disclosed multilayer construction in which the interlayer is sufficiently compressed and effectively mechanically joined to the inner and outer sleeves will control the distortion seen in shot sleeves and effectively maintain the gap tolerance during the die cast process.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A method of manufacturing a shot sleeve (18) for a die casting machine (10), the method comprising:
engaging an intermediate sleeve layer (30) with one of an outer sleeve layer (32) and an inner sleeve layer (28); and
shrink fitting the other of the outer sleeve layer (32) and an inner sleeve layer (28) into engagement with the intermediate sleeve layer (30);
wherein the engaging step includes shrink fitting the outer sleeve layer (32) onto the intermediate sleeve layer (30), and other shrink fitting step includes shrink fitting the inner sleeve layer (28) into the intermediate sleeve layer (30); and
wherein the inner sleeve layer (28) shrink fitting step generates a first radial compressive force (C2) on the intermediate sleeve layer (30), and the outer sleeve layer (32) shrink fitting step generates a second radial compressive force (C1) on the intermediate sleeve layer (30); **characterised in that**:
the first and second radial compressive forces (C1, C2) generate a compressive stress of 35-45 MPa on the intermediate sleeve layer (30);
the intermediate sleeve layer (30) is ceramic and the inner sleeve layer (28) is metal.

2. The method according to claim 1, wherein the inner sleeve layer (28) shrink fitting step is performed after the outer sleeve layer (32) shrink fitting step.

3. The method according to any preceding claim, wherein outer sleeve layer (32) shrink fitting step is performed by providing the outer sleeve layer (32) at a higher temperature than the intermediate sleeve layer (30), and inserting the intermediate sleeve layer (30) into the outer sleeve layer (32).

4. The method according to any preceding claim, wherein inner sleeve layer (28) shrink fitting step is performed by providing the inner sleeve layer (28) at a lower temperature than the intermediate sleeve layer (30), and inserting the inner sleeve layer (28) into the intermediate sleeve layer (30).

5. The method according to any preceding claim, wherein the intermediate sleeve layer (30) is provided by ring segments (131).

6. The method according to any preceding claim, wherein the outer sleeve layer (32) is metal.

7. The method according to any preceding claim, wherein the shot sleeve (18) consists of three layers provided by the outer, intermediate and inner sleeve layers (32,30,28).

8. The method according to any preceding claim, comprising the step of machining the inner sleeve surface to provide a plunger surface configured to receive a plunger.

9. The method according to any preceding claim, comprising the step of replacing a worn inner sleeve layer (28) by heating the outer sleeve layer (32) and removing the intermediate and inner sleeve layers (28,30) from the outer sleeve layer (32).

10. The method according to any preceding claim, wherein the shrink fitting step provides an interference fit in the amount of 0.0024 inch (61 µm).

## Patentansprüche

1. Verfahren zum Herstellen einer Schusshülse (18) für eine Druckgießmaschine (10), wobei das Verfahren Folgendes umfasst:
Ineingriffnehmen einer Zwischenhülsenschicht (30) mit einer von einer Außenhülsenschicht (32) und einer Innenhülsenschicht (28); und
Aufschrumpfen der anderen der Außenhülsenschicht (32) und einer Innenhülsenschicht (28) in Eingriff mit der Zwischenhülsenschicht (30);
wobei der Schritt des Ineingriffbringens Aufschrumpfen der Außenhülsenschicht (32) auf die Zwischenhülsenschicht (30) beinhaltet und der andere Aufschrumpfschritt Aufschrumpfen der Innenhülsenschicht (28) in die Zwischenhülsenschicht (30) beinhaltet; und
wobei der Schritt des Aufschrumpfens der Innenhülsenschicht (28) ein erste radiale Druckkraft (C2) auf der Zwischenhülsenschicht (30) erzeugt und der Schritt des Aufschrumpfens der Außenhülsenschicht (32) eine zweite radiale Druckkraft (C1) auf der Zwischenhülsenschicht (30) erzeugt; **dadurch gekennzeichnet, dass**:
die erste und zweite radiale Druckkraft (C1,C2) eine Druckbeanspruchung von 35-45 MPa auf der Zwischenhülsenschicht (30) erzeugen;
die Zwischenhülsenschicht (30) Keramik ist und die Innenhülsenschicht (28) Metall ist.

2. Verfahren nach Anspruch 1, wobei der Schritt des Aufschrumpfens der Innenhülsenschicht (28) nach dem Schritt des Aufschrumpfens der Außenhülsenschicht (32) durchgeführt wird.

3. Verfahren nach einem der vorhergehenden Ansprüche, wobei der Schritt des Aufschrumpfens der Außenhülsenschicht (32) durch Bereitstellen der Außenhülsenschicht (32) bei einer höheren Temperatur als die Zwischenhülsenschicht (30) und Einführen der Zwischenhülsenschicht (30) in die Außenhülsenschicht (32) durchgeführt wird.

4. Verfahren nach einem der vorhergehenden Ansprüche, wobei der Schritt des Aufschrumpfens der Innenhülsenschicht (28) durch Bereitstellen der Innenhülsenschicht (28) bei einer niedrigeren Temperatur als die Zwischenhülsenschicht (30) und Einführen der Innenhülsenschicht (28) in die Zwischenhülsenschicht (30) durchgeführt wird.

5. Verfahren nach einem der vorhergehenden Ansprüche, wobei die Zwischenhülsenschicht (30) durch Ringsegmente (131) bereitgestellt wird.

6. Verfahren nach einem der vorhergehenden Ansprüche, wobei die Außenhülsenschicht (32) Metall ist.

7. Verfahren nach einem der vorhergehenden Ansprüche, wobei die Schusshülse (18) aus drei Schichten besteht, die durch die Außen-, Zwischen- und Innenhülsenschicht (32,30,28) bereitgestellt sind.

8. Verfahren nach einem der vorhergehenden Ansprüche, das den Schritt des Bearbeitens der Innenhülsenfläche umfasst, um eine Kolbenfläche bereitzustellen, die dazu konfiguriert ist, einen Kolben aufzunehmen.

9. Verfahren nach einem der vorhergehenden Ansprüche, das den Schritt des Austauschens einer abgenutzten Innenhülsenschicht (28) durch Erhitzen der Außenhülsenschicht (32) und Entfernen der Zwischen- und Innenhülsenschicht (28,30) von der Außenhülsenschicht (32) umfasst.

10. Verfahren nach einem der vorhergehenden Ansprüche, wobei der Schritt des Aufschrumpfens einen Presssitz in Höhe von 0,0024 Zoll (61 µm) bereitstellt.

## Revendications

1. Procédé de fabrication d'un cylindre d'injection (18) pour une machine à couler sous pression (10), le procédé comprenant :
la mise en prise d'une couche de cylindre intermédiaire (30) avec l'une d'une couche de cylindre externe (32) et d'une couche de cylindre interne (28) ; et
l'ajustement par frettage de l'autre de la couche de cylindre externe (32) et d'une couche de cylindre interne (28) en prise avec la couche de cylindre intermédiaire (30) ;
dans lequel l'étape de mise en prise comporte l'ajustement par frettage de la couche de cylindre externe (32) sur la couche de cylindre intermédiaire (30), et une autre étape d'ajustement par frettage comporte l'ajustement par frettage de la couche de cylindre interne (28) dans la couche de cylindre intermédiaire (30) ; et
dans lequel l'étape d'ajustement par frettage de la couche de cylindre interne (28) génère une première force de compression radiale (C2) sur la couche de cylindre intermédiaire (30), et l'étape d'ajustement par frettage de la couche de cylindre externe (32) génère une seconde force de compression radiale (C1) sur la couche de cylindre intermédiaire (30) ; **caractérisé en ce que** :
les première et seconde forces de compression radiales (C1, C2) génèrent une contrainte de compression de 35 à 45 MPa sur la couche de cylindre intermédiaire (30) ;
la couche de cylindre intermédiaire (30) est en céramique et la couche de cylindre interne (28) est en métal.

2. Procédé selon la revendication 1, dans lequel l'étape d'ajustement par frettage de la couche de cylindre interne (28) est exécutée après l'étape d'ajustement par frettage de la couche de cylindre externe (32).

3. Procédé selon une quelconque revendication précédente, dans lequel l'étape d'ajustement par frettage de la couche de cylindre externe (32) est exécutée par la fourniture de la couche de cylindre externe (32) à une température plus élevée que la couche de cylindre intermédiaire (30), et par l'insertion de la couche de cylindre intermédiaire (30) dans la couche de cylindre externe (32).

4. Procédé selon une quelconque revendication précédente, dans lequel l'étape d'ajustement par frettage de la couche de cylindre interne (28) est exécutée par la fourniture de la couche de cylindre interne (28) à une température inférieure à la couche de cylindre intermédiaire (30), et par l'insertion de la couche de cylindre interne (28) dans la couche de cylindre intermédiaire (30).

5. Procédé selon une quelconque revendication précédente, dans lequel la couche de cylindre intermédiaire (30) est fournie par des segments de bague (131).

6. Procédé selon une quelconque revendication précédente, dans lequel la couche de cylindre externe (32) est en métal.

7. Procédé selon une quelconque revendication précédente, dans lequel le cylindre d'injection (18) est constitué de trois couches fournies par les couches de cylindre externe, intermédiaire et interne (32,30,28).

8. Procédé selon une quelconque revendication précédente, comprenant l'étape d'usinage de la surface de cylindre interne pour fournir une surface de piston configurée pour recevoir un piston.

9. Procédé selon une quelconque revendication précédente, comprenant l'étape de remplacement d'une couche de cylindre interne (28) usée par le chauffage de la couche de cylindre externe (32) et par le retrait des couches de cylindre intermédiaire et interne (28,30) de la couche de cylindre externe (32).

10. Procédé selon une quelconque revendication précédente, dans lequel l'étape d'ajustement par frettage fournit un ajustement serré d'une quantité de 0,0024 pouce (61 µm).
